Europäisches Patentamt

European Patent Office

Office européen des brevets

(1) Publication number: **0 145 632**
**B1**

## EUROPEAN PATENT SPECIFICATION

(45) Date of publication of patent specification: **26.04.89**

(51) Int. Cl.⁴: **F 16 K 1/226**

(21) Application number: **84460009.8**

(22) Date of filing: **31.10.84**

(54) Improved butterfly valve.

(30) Priority: **07.11.83 FR 8317656**

(43) Date of publication of application:
**19.06.85 Bulletin 85/25**

(45) Publication of the grant of the patent:
**26.04.89 Bulletin 89/17**

(84) Designated Contracting States:
**BE CH DE IT LI NL SE**

(56) References cited:
**FR-A-1 305 717**
**FR-A-1 471 931**
**FR-A-2 144 236**
**FR-A-2 247 653**
**FR-A-2 457 423**
**US-A-3 275 289**

(73) Proprietor: **MASONEILAN INTERNATIONAL, Inc.**
**10077 Grogans Mill Road**
**The Woodland, Texas 77380-1016 (US)**

(72) Inventor: **Verdelet, Alain Bernard Auguste**
**2, Avenue Louis Avoye**
**F-76460 St. Valéry-en-Caux (FR)**

(74) Representative: **Le Guen, Louis François**
**CABINET Louis LE GUEN 38, rue Levavasseur**
**B.P. 91**
**F-35802 Dinard Cédex (FR)**

Courier Press, Leamington Spa, England.

**Description**

The present invention relates to a butterfly valve comprising a valve housing defining a flow passage and a closure disc rotatable in the valve housing around an axis that is transverse to the flow axis, one of those two parts being provided with a sealing ring and the other having a seat surface for fitting with said sealing ring.

In the French Patent No. 2,456,271, there is described a butterfly valve comprised of a valve housing having a bore wherein a closure disc is rotatably mounted around an axis that is transverse to the bore axis, so as to be moved between a closed position, wherein the sealing ring secured to or supported by the closure disc periphery is in fluid-tight contact with a seat secured to the valve housing, and a full open position that is substantially transverse to the closed position, the closure disc peripheral surface and the associated valve housing seat surface being both conical surfaces defined by two circular cones having a common axis, when in closed position, said common axis forming an acute angle with the bore axis, the closure disc shaft axis being offset with relation to the median plane of the closure disc, in the bore axis direction on the opposite side with respect to the apex of the circular cone defining the seat surface.

This butterfly valve is characterized in that the closure disc shaft axis is radially offset with relation to the bore axis toward the apex of the circular cone defining the seat surface.

The following parameters determine the good operation conditions of that type of valves:
— clearance angle,
— contact pressure of surfaces forming the fluid-tight seal,
— shapes of the surfaces forming the fluid-tight seal,
— closure disc rotation torque.

This invention aims at creating a valve the structure of which is the result of an optimized compromise taking into account the above mentioned parameters.

That object of the invention is reached by implementing the structure defined in the claims attached to the present specification.

The invention will be better understood from the following description made in conjunction with the attached drawings, wherein:

Fig. 1 is a diagram showing on the projected limits of a cone defining the valve housing seat the curves mapping the constant values of the clearance angle as well as a closure butterfly disc according to this invention,

Fig. 2 is a diagram showing on the same projected limits as in Fig. 1 the curves mapping the constant values of the contact pressure or distortion,

Fig. 3 is a schematic view illustrating the graphic construction of a point Q of the seal plane for which the minimum clearance angle is maximum, and

Fig. 4 is a cross-sectional view of a preferred embodiment of a valve according to this invention.

Before proceeding with the description of the valve according to this invention, it will be given an outline of the formulation of the problem that the applicant had to solve taking into account the above mentioned operation parameters.

It is assumed that the valve seat is defined by a portion of a steady circular cone $C_1$ the apex angle of which is $2\varphi$ and that the closure disc is defined by a portion of a mobile cone $C_2$ that is superposed with the cone $C_1$ in the closed position.

The cone $C_2$ is rotatable around an axis transverse to the axis of the cone $C_1$.

When the portion of the cone $C_2$ is rotated by an infinitely small amount around the above defined axis, for each point of the cone $C_2$, the angle between the trajectory $\vec{t}$ of $C_2$ with the perpendicular $\vec{n}$ to the cone $C_1$ is computed, $\vec{n}$ and $\vec{t}$ being unity vectors.

When that angle is under 90°, the trajectory is engaging.

When it is over 90°, the trajectory is disengaging.

Then the valve closure disc needs to be cut within the portions of the cone $C_2$ where the angle of the trajectory is at least equal to the friction angle.

The pressure of contact between the seal surfaces is also a parameter which also intervenes in the design and operation of a valve.

That pressure is generated when the closure disc engages the seat.

It is assumed that the closure disc that has been cut from the portion of the cone $C_2$ has a plastic or resilient periphery.

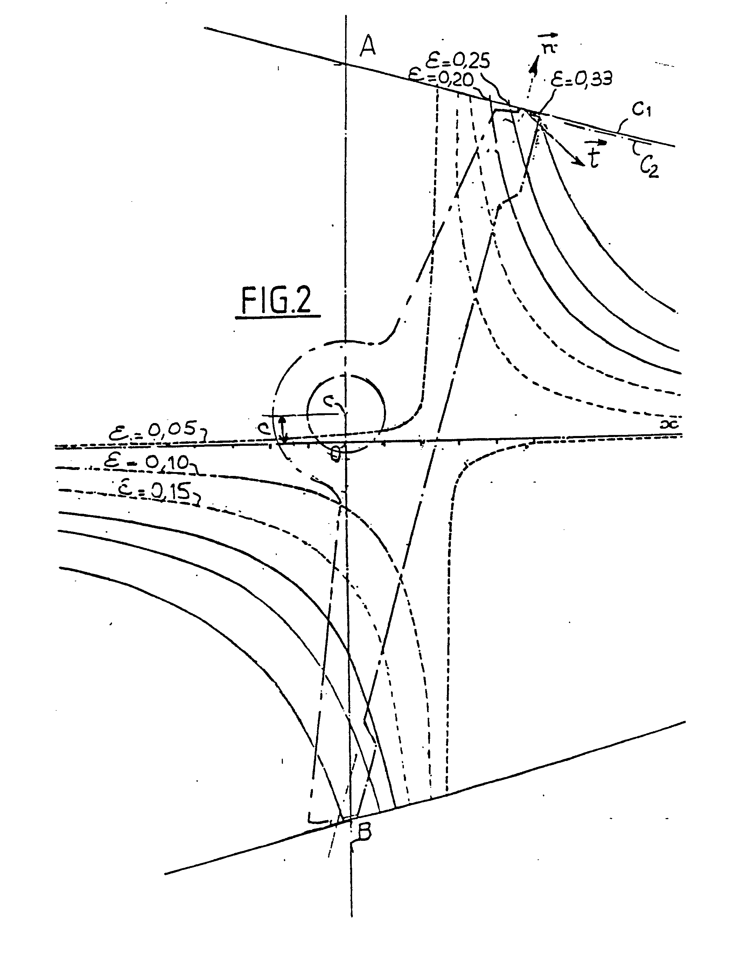

For a small angle of rotation, the deformation at a point of the portion of cone $C_2$ depends on the minimum distance from that point to the closure disc rotation axis and depends also on the angle at that point between the perpendicular $\vec{n}$ to the cone $C_1$ and the trajectory $\vec{t}$ (Fig. 2).

The fluid-tight surface of the closure butterfly disc may also be made of metallic material and, in this case, the above mentioned deformation is indeed a pressure of contact.

As regarding the clearance angle, that deformation or pressure will be computed for each point of the cone $C_2$ engaging the cone $C_1$.

The profile of the closure butterfly disc must be selected so that said deformation or pressure is as homogeneous as possible along the closure disc periphery.

Regarding the shape of the sealing surfaces, it is necessary to obtain approximated solutions taking into account the plasticity or elasticity of the peripheral seal, keeping in mind that the perfect geometrical solution would consist in associating a seat and a closure disc having different cone angles.

Finally, the torque needed for rotating or maneuvering a closure disc results from the seating of the sealing surface, the pressure applied to the closure disc and the axis offset distance with respect to the center of the pushing surface.

In the case of a valve this torque should be as small as possible.

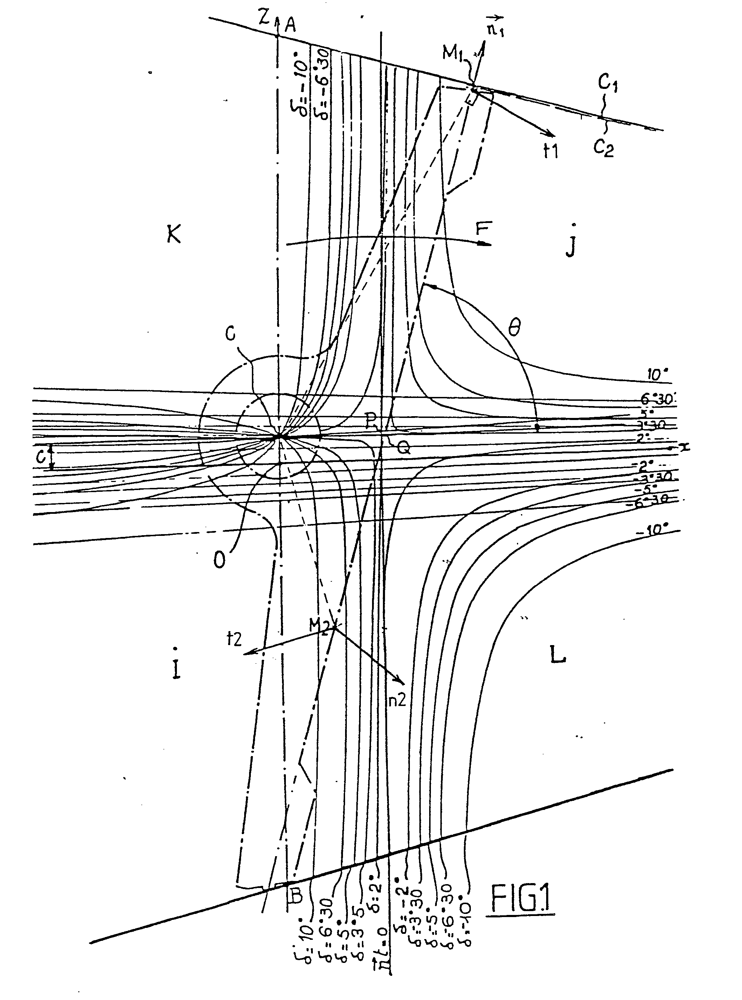

Referring to the schematic diagram shown in Fig. 1, there was selected a rectangular coordinate system $\vec{Ox}$, $\vec{Oy}$, $\vec{Oz}$.

The axis $\vec{Ox}$ is the one axis from which the seat is defined. The arrow F shows the opening rotation direction of the closure disc which rotates around an axis parallel to axis $\vec{Oy}$, the trace of that axis being indicated by a point C in Fig. 1.

Then, in the above mentioned rectangular coordinate system, curves are drawn which join together the points of the cone $C_1$ having the same clearance angle when the closure disc rotates around the point C.

In this respect, with OA=OB=1, the points A and B being the intersection points of the axis $\vec{Oz}$ with the cone $C_1$,

$$\vec{OC}=\vec{C}.$$

The arbitrary selection of C belonging to $\vec{Oz}$, together with OA=OB=1, does not limit at all the generality of the solution. Indeed any found solution generates an infinity of homothetic solutions.

The cosine of the angle between the perpendicular line $\vec{n}$ to the cone $C_1$ and the tangent line $\vec{t}$ to cone $C_2$ at a point M of contact between these cones, is given by the scalar product of these two vectors.

$$\vec{n}\cdot\vec{t}=\frac{(z-c)\sin\varphi-\dfrac{xz\cos\varphi}{1-xtg\varphi}}{\sqrt{x^2+(z-c)^2}} \qquad (1)$$

In this relation, x and z are the coordinates of the point M and $\varphi$ the apex half angle of the cone $C_1$. The clearance angle $\delta$ of the cone $C_2$ with respect to the cone $C_1$ is defined by:

$$\sin\delta=\vec{n}\cdot\vec{t}=\cos(\vec{n},\vec{t}) \qquad (2)$$

That relation makes it possible to draw a map of the clearance angle at any point M of cone $C_1$ in the area where the closure disc is rotatable.

This map appears in Fig. 1 as a set of hyperbolized curves established for various values of $\delta$.

It appears that when the scalar product $\vec{n}\cdot\vec{t}$ is positive, the trajectory of the corresponding point M is "engaging".

When $\vec{n}\cdot\vec{t}$ is negative, the trajectory is "disengaging".

When $\vec{n}\cdot\vec{t}=0$, the contact is a "sliding" contact.

Thus in Fig. 1, there may be defined areas of the cone $C_1$ where the trajectory is "engaging" or "disengaging".

According to relation (1), it is possible to define on cone $C_1$, curves where angle $\delta$ is constant. In this respect, it is assumed that:

$$K=\frac{\sin\delta}{\sin\varphi}, \qquad\qquad u=\frac{x}{tg\varphi(1-xtg\varphi)}$$

$$A=(1-u)^2-K^2$$

$$B'=C(1-u-K^2)$$

$$C=C^2-K^2(x^2+C^2)$$

For a given absolute value of $\delta$, the z coordinate is obtained:

$$z=\frac{B'}{A}\pm\sqrt{\left(\frac{B'}{A}\right)^2-\frac{C}{A}} \qquad (3)$$

The sign of z is obtained by

$$(z-c-zu) \sin \delta > 0 \tag{4}$$

It will be noted that the map shown in Fig. 1 represents a set of projections onto the plane of symmetry $\overrightarrow{Ox}\,\overrightarrow{z}$ of the curves which actually are on the cone $C_1$.

As a consequence, each point P of the plane is the orthogonal projection of two symmetrical points $P_1$ and $P_2$ of the cone $C_1$ with respect to this plan $\overrightarrow{Ox}\,\overrightarrow{z}$.

For having a distance C=0 from the closure disc rotation center to the center O of the rectangular coordinate system, the sealing line between the closure disc and the seat needs to be located in a plane transverse to the axis $\overrightarrow{Ox}$ of the cone, i.e. $\delta=0$.

Therefore, assuming the closure disc has an opening rotation direction "screwing" around axis $\overrightarrow{Oy}$, the point C needs to be located above the axis $\overrightarrow{Ox}$.

With OC=C, this results in the condition C>O.

The closure disc must be cut out from a portion defined by the equation relative to $\overrightarrow{n} \cdot \overrightarrow{t}$ leading to a "disengaging" angle.

In the vicinity of the particular point P called pole which indeed corresponds to two points $P_1$ and $P_2$ of the cone, there is another point Q called hyperbolic point.

The position of the point P is defined by the relations:

xp=sin φ cos φ

zp=c

At point P, the angle δ is given by:

$$(\sin \delta)p = (\overrightarrow{n} \cdot \overrightarrow{t})p = -\frac{c}{\cos \varphi} \tag{5}$$

Considering the area in the vicinity of the pont P and four points I, J, K, L, each located in a quadrant of the rectangular coordinate system $\overrightarrow{Ox}\,\overrightarrow{z}$, it appears that if one moves from I to J so as to intersect the curves representing δ, the angle δ first decreases, then increases.

If one moves from K to L, δ first increases, then decreases.

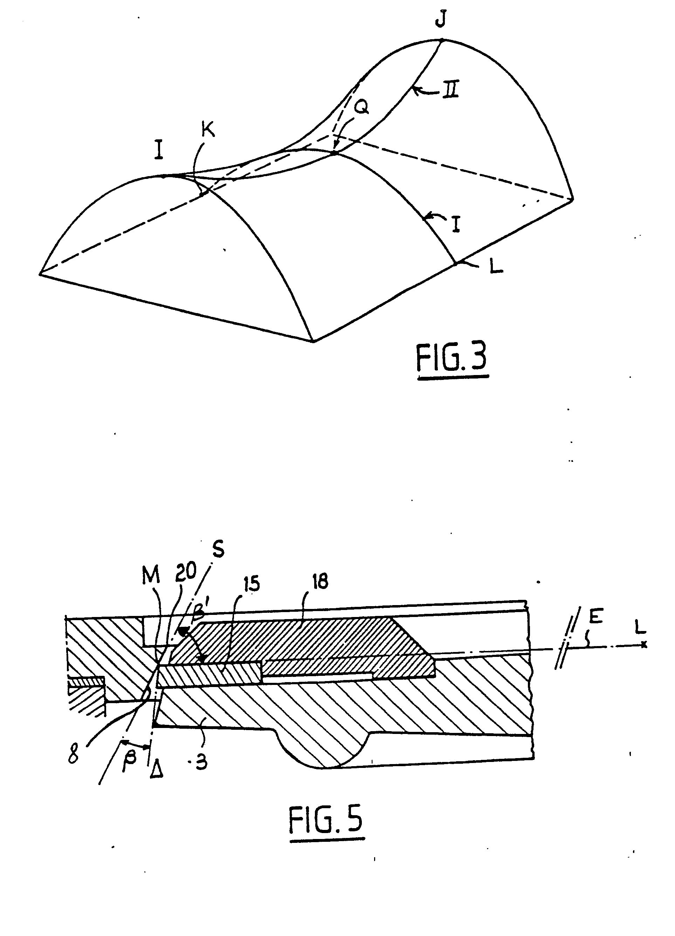

That remark may be visualized in Fig. 3 which represents a profile called hyperbolic bridge.

In order to have δ maximum along the entire closure disc periphery, the seal plane must include the point located at the "top" of line I and at the bottom of the line II shown in Fig. 3.

That point Q is the point wherein the smallest clearance angle is maximum. The point Q is also called the hyperbolic point.

To find out that point Q, it is sufficient to solve the following equation system:

$$\frac{\partial(\overrightarrow{n} \cdot \overrightarrow{t})}{\partial x} = 0$$

$$\frac{\partial(\overrightarrow{n} \cdot \overrightarrow{t})}{\partial z} = 0$$

and to check that the curvature of the curves I and II, Fig. 3, are opposite, thus defining a "horse saddle".

With $c \neq 0$, the solutions of that system are as follows:

for z:

$$z-c = -C \sin^2 \varphi (1-C)^2 \tag{6}$$

for x, the three following values:

$$x=0$$

$$x=C^2 \sin \varphi \cos \varphi$$

$$x=\sin \varphi \cos \varphi (1-C^2) \tag{7}$$

The exact values of the coordinates and the angle δ of the point Q may be obtained from the following relation:

$$x^3_Q + (C^2-3) \sin \varphi \cos \varphi\, x^2_Q + [(3 \sin^2 \varphi \cos \varphi +$$

$$C^2 \cos^2 \varphi (1-3 \sin^2 \varphi))] x_Q + C^2 \sin \varphi \cos^3 \varphi (2 \sin^2 \varphi - 1) +$$

$$C^4 \sin \varphi \cos^5 \varphi - \sin^3 \varphi \cos^3 \varphi = 0 \tag{8}$$

4

The approached solutions of equation (8) are as follows:

$$x_Q = \sin \varphi \cos \varphi (1 - C^2) \qquad \text{(a)}$$

$$z_Q - C = -C \sin^2 \varphi (1 - C^2) \qquad \text{(b)} \qquad \text{(9)}$$

$$\vec{n} \cdot \vec{t}_Q = -\frac{c}{\cos \varphi} \sqrt{\frac{1}{1 + c^2 \mathrm{tg}^2 \varphi}} \qquad \text{(c)}$$

The accuracy of the approached values given by those solutions is of $\pm 5 \times 10^{-7}$ with respect to the exact values, which is more than enough taking into account the machining tolerances.

When, taking into account technological reasins, a minimum $\vec{n} \cdot \vec{t}$ is selected at point Q, a couple of parameters (c, $\varphi$) is obtained which agree with the conditions defined in relationship (c).

The map of the clearance anges shown in Fig. 1 makes it possible to select an incline angle $\theta$ of the theoretical seal line around the above mentioned point Q.

The theoretical seal line should pass through the above mentioned point Q so that the minimum of $\delta$ is as large as possible.

The "maximum of the minimum" of $\delta$ depends on $\varphi$ and c.

Thus it is possible to define a maximum for $\delta$ and to derive therefrom some couples of values $\delta$, c.

$$\sin \delta_p = \frac{-c}{\cos \varphi} \qquad \text{(10)}$$

The map of curves shown in Fig. 1 contributes to determine the incline angle $\delta$ of the theoretical seal line in the vicinity of the above mentioned point Q so that the gradient of $\delta$ is maximum.

The optimum clearance angle having been determined, one must examine the valve operation conditions regarding the pressure of contact of the closure disc on the seat of the plastic deformation of the joint.

The valve seal surfaces being assumed resilient or plastic, mutual compression $\varepsilon$ thereof is given by the relation:

$$d\varepsilon = \rho \sin \delta d\alpha$$

wherein:

— $\rho$ is the minimum distance from the seal point to the rotation axis,

— $d\alpha$ is the infinitely small rotation angle squeezing the seal surface in the closing direction.

A geometry of the joint is searched so that the product $\rho \sin \delta$ is the most constant possible at each point M belonging to the seal periphery.

Thus, from the above:

$$\sin \delta = \vec{n} \cdot \vec{t}$$

$$\rho = |\vec{CM}|$$

$$\vec{CM} = x\vec{x} + [\sqrt{(1 - x \mathrm{tg} \ \varphi) - z^2}]\vec{y} + (z - c)\vec{z}$$

$$CM^2 = x^2 + (1 - x \mathrm{tg} \ \varphi)^2 + c^2 - 2cz$$

Therefore the expression $CM^2 (n \cdot t)^2$ has to be considered and the conditions involving $CM^2$ $(\vec{n} \cdot \vec{t})^2 \approx \mathrm{cst}$ have to the established.

The closure moment $\vec{m}$ applied to the rotation axis $C\vec{y}$ of the closure disc generates a pressure p onto the seat.

Considering an infinitely small surface in the vicinity of the point M:

$$d\vec{m} = \vec{DM} \wedge \vec{n} \cdot p \ ds$$

D being the orthogonal projection of M to the axis $O\vec{y}$.

The $O\vec{x}$ and $O\vec{y}$ components of this moment are balanced, either by symmetry or reaction onto the supports.

Only the $O\vec{y}$ component or maneuver moment is of interest.

$$m_y = d\vec{m} \cdot \vec{y} = [\vec{DM} \wedge (\vec{n} \cdot p \cdot ds)] \cdot \vec{y}$$

The ratio $\varepsilon = m_y / pds$ is representative of the elastic or plastic distorsion of the seal joint.

For instance, it represents the torque needed to obtain a force of 1 Newton at the point M. With all the calculations completed:

$$\varepsilon = (z-c)\ \sin\ \varphi - \frac{zx\ \cos\ \varphi}{1-xtg\varphi} \tag{11}$$

Therefore, the value of z is:

$$z = \frac{(1-xtg\varphi)\ (c\ \sin\ \varphi + \varepsilon)}{(1-tg\varphi)\ \sin\ \varphi - x\ \cos\ \varphi} \tag{12}$$

This function allows to draw on the cone $C_1$ a map of the ratios $\varepsilon$ which leads to an hyperbols family in the plane $(O\vec{x},\ \vec{z})$ with $\varepsilon$ being a constant.

The aspect of the curves corresponding to $\varepsilon$ being a constant is quite similar to the map of the curves with $\delta$ constant, which makes easier the selection of those two parameters so as to obtain compatible values.

The horizontal and vertical asymptotes of those curves are defined by the following relations:

$$xa = \sin\ \varphi\ \cos\ \varphi$$

$$za = \sin\ \varphi(c\ \sin\ \varphi + \varepsilon) \tag{13}$$

When $\varepsilon$ tends to 0:

$$\lim\ za = c\ \sin^2\ \varphi$$

The variations of $\varepsilon$ are defined by:

$$\frac{\partial\varepsilon}{\partial z} = \sin\ \varphi - \frac{x\ \cos\ \varphi}{1-xtg\varphi} = 0\ \text{for}\ x = \sin\ \varphi\ \cos\ \varphi$$

$$\frac{\partial\varepsilon}{\partial x} = \frac{-z\ \cos\ \varphi}{(1-xtg\varphi)^2} = 0\ \text{for}\ z = 0$$

There is an extreme value of $\varepsilon$ for the particular point:

$$x = \sin\ \varphi\ \cos\ \varphi \qquad y = 0$$

The values of $\varepsilon$ are given by the relation $\varepsilon = -c\ \sin\ \varphi$.

With $\varepsilon = 0$ and $\delta = 0$, the hyperbolae corresponding to these values are identical and given by the following relation:

$$z = \frac{c}{1 - \dfrac{x}{(1-xtg\varphi)tg\varphi}}$$

Considering the similar aspects of $\varepsilon$ and $\delta$ maps, there is no difficulty in selecting an incline angle $\theta$ between the disc seal plane and the seat axis.

It is better to select angle $\theta$ so that it is smaller than the complement of the engaging angle and larger or equal to a limit value of about $\pi/4$.

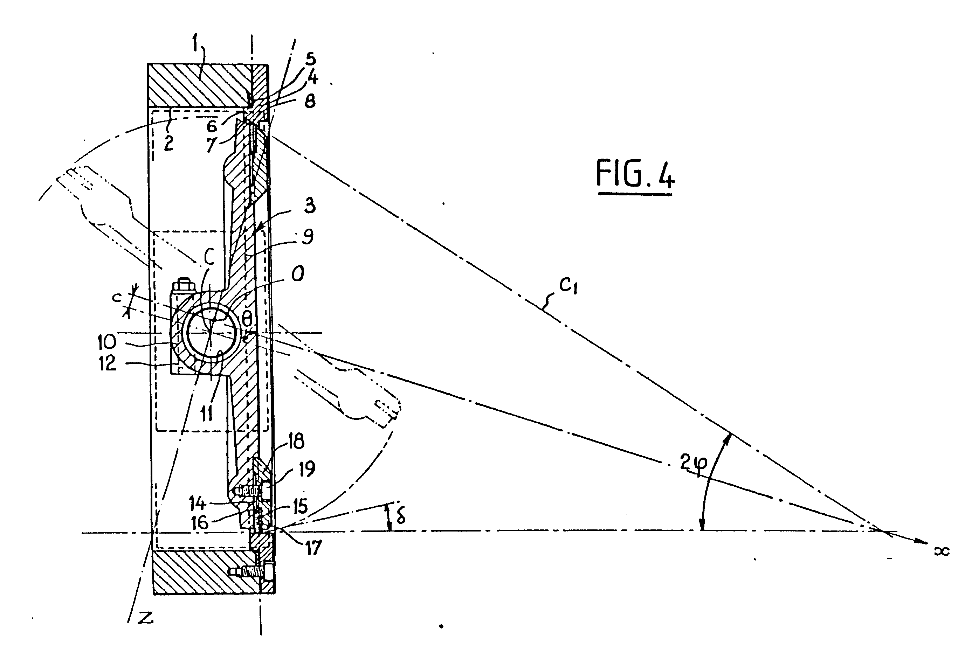

The valve shown in the Fig. 4 has a pipe-shaped body 1 wherein a bore 2 forms a passage for the fluid the flow of which is controlled by the closure disc 3 that is rotatably mounted around the axis YY. The rotation axis is represented by a point C on the Fig. 1, the coordinates of which give the offset distance from this point to the axis XX.

At the downstream end of the body 1, a ring 4 is mounted, a join or seal 5 being mounted between the body and the ring. The ring 4 has a groove 6 the internal bore of which is the seat 7 for the peripheral surface 8 of a disc or tray 9 of the disc 3.

The main part of the closure disc is extended to the upstream direction by bosses 10 each traversed by

6

a cylindrical hole 11 with an axis YY in which is engaged and fixed with a key 12, an half-axis 13 rotating in the body 1 and providing the rotative motion of the closure disc or butterfly.

In a deep peripheral groove 14 of the closure disc, a fluid-tight seal ring 15 is inserted which, in the closure position, is elastically applied with a pressure onto the associated surface 8 of the seat. The peripheral groove 14 is defined of two complementary grooves 16, 17, respectively provided in a face of the main part 3 and in a face fitted opposite to a plate 18 mounted with screws 19 on the main part 3.

The sealing material of the seat 7 and/or the ring 15 is selected with consideration to the operation requirements and, in particular, may be a plastic or metal material which complies with the plastic and elastic operation requirements.

In Fig. 5, there is shown the angle between the seal ring of the closure disc and the seat.

The middle line E indicating the seal plane between the seat 8 and the closure disc 3 is an ellipse in the described embodiment.

A fluid-tight surface is defined by a given $\beta$ angle measured at any point M of ellipse E between straight lines $\Delta$ and the generatrix SM of cone C1 in the plane defined by SM and the center L of ellipse E.

Thus, it is possible to have an edge 20 between the seal surface 8 of the seat 6 and the seal ring 15.

The fluid-tight sharp edge 20 may also be defined on the seal ring by two surfaces respectively forming acute angles $\beta$ and $\beta'$ with the surface 8 of the seat.

The angle $\beta$ may be equal to zero. In that case, a portion of the seal ring surface and the corresponding surface of the seat are joined.

Thus having established by computation, the specifications of a butterfly valve, they can easily be translated into machining instructions for conventional machine tools in order to obtain the wanted shapes for the seat and the disc.

## Claims

1. A butterfly valve including a valve housing (1) with a bore defining a flow passage (2) and a closure disc or butterfly (3) rotatably mounted in the said flow passage around a shaft that is transverse to the bore axis so as to be moved between a closed position, wherein the sealing ring secured to or supported by the closure disc periphery is in fluid-tight contact with a seat (8) secured to the valve housing, and a full open position that is substantially transverse to the closed position, the peripheral surface of the closure disc and the associated valve housing seat surface being both frusto-conical surfaces defined by two circular cones, the closure disc shaft axis being offset with relation to the median plane of the closure disc in the bore axis direction the opposite side with respect to the apex of that circular cone defining the valve housing seat surface, characterized in that the position of the seal plane where the closure disc seals engages the valve housing seat is determined, for a given value of the cone angle 2 of that circular cone defining the valve housing seat surface and a given position of the closure disc shaft axis in an orthogonal system $\overrightarrow{OX}, \overrightarrow{Y}, \overrightarrow{Z}$ wherein axis $\overrightarrow{OX}$ is the said cone axis, axis $\overrightarrow{OY}$ is parallel to the shaft axis and axis $\overrightarrow{OZ}$ intersects the shaft axis at a pont C, such that a couple of points of said seal plane, for which points the minimum clearance angle ($\delta$) is maximum, project in the direction parallel to the shaft axis in said seal plane into a point Q located in the plane ($\overrightarrow{OX}, \overrightarrow{Z}$) of said orthogonal system, the coordinates of said point Q and the corresponding clearance angle ($\delta_Q$) being respectively given by the following approximated relations:

$$X_Q = \sin \varphi \cos \varphi (1-c^2)$$

$$Z_Q = c[1 - \sin^2 \varphi (1-c^2)]$$

$$\sin \delta_Q = \frac{c}{\cos \varphi} \sqrt{\frac{1}{1+c^2 tg^2\varphi}}$$

c being the distance from said point C to point O, the inclination $\theta$ of the closure disc in its closed position with respect to the bore axis being selected within the range between the complement of the blocking angle and $\pi/4$.

2. A butterfly valve according to claim 1, wherein at least one of the seal surface, either seat or closure disc, may be submitted to a plastic or elastic deformation when the closure disc is applied onto the seat, characterized in that the compression value $\varepsilon$ is given by the relation:

$$\varepsilon = (z-c) \sin \varphi - \frac{zx \cos \varphi}{1-xtg\varphi}$$

wherein x and z are the coordinates of the orthogonal projection to plane (OX, Z) of a current pair of symmetrical points belonging to the seal surface.

3. A butterfly valve according to claim 1 or 2, characterized in that the seal surface is generated by

7

straight lines forming a given angle β with the generatrix of the first cone at any point of the ellipse E plane in the plane defined by the generatrix and the center of the said ellipse.

**Patentansprüche**

1. Klappenventil mit einem Ventilgehäuse (1) mit einer eine Strömungspassage (2) definierenden Bohrung und einer Verschlußscheibe oder Klappe (3), die in der Strömungspassage um eine Welle drehbar montiert ist, welche quer zur Bohrungsachse liegt, so daß die Klappe zwischen einer geschlossenen Stellung bewegbar ist, in welcher der Dichtring, der am Umfang der Verschlußscheibe befestigt oder getragen ist, sich in fluiddichtem Kontakt mit einem Sitz (8) befindet, der am Ventilgehäuse befestigt ist, und einer völlig offenen Stellung, die im wesentlichen quer zur geschlossenen Stellung liegt, wobei die Umfangsfläche der Verschlußscheibe und die zugeordnete Ventilgehäusesitzoberfläche beide stumpfkegelige Oberflächen sind, die durch zwei kreisförmige Kegel begrenzt sind, wobei ferner die Verschlußscheiben-Wellenachse in Bezug auf die Mittelebene der Verschlußscheibe in der Bohrungsachsenrichtung zur entgegengesetzten Seite bezüglich des Apex desjenigen kreisförmigen Kegels versetzt ist, der die Ventilgehäusestizoberfläche definiert, dadurch gekennzeichnet, daß die Stellung der Dichtebene, an der die Verschlußscheibendichtungen mit dem Ventilgehäusesitz in Eingriff treten, für einen vorgegebenen Wert des Kegelwinkels $2\varphi$ desjenigen Kreiskegels, der die Ventilgehäusesitzfläche definiert, und für eine gegebene Stellung der Verschlußscheibenwellenachse in einem orthogonalen System $O\vec{X}, \vec{Y}, \vec{Z}$, wobei die Achse $O\vec{X}$ die genannte Kegelachse ist und $O\vec{Y}$ parallel zur Wellenachse ist und die Achse $O\vec{Z}$ die Wellenachse in einem Punkt C schneidet, derart definiert ist, daß ein Paar von Punkten der Dichtebene, für welche Punkte der minimale Freiwinkel (δ) maximal ist, in Richtung parallel zur Wellenachse in der Dichtebene in einen Punkt Q hineinragt, der in der Ebene $(O\vec{X}, \vec{Z})$ des orthogonale Systems gelegen ist, und daß die Koordinaten dieses Punktes Q und der entsprechende Freiwinkel $\delta_Q$ jeweils durch die folgenden angenäherten Beziehungen gegeben sind:

$$X_Q = \sin \varphi \cos \varphi(1-c^2)$$

$$Z_Q = c[1-\sin^2 \varphi(1-c^2)]$$

$$\sin \delta_Q = \frac{c}{\cos \varphi}\sqrt{\frac{1}{1+c^2 tg^2\varphi}}$$

wobei c die Entfernung von dem Punkt C zu dem Punkt O ist, und daß die Neigung θ der Verschlußscheibe in ihrer geschlossenen Stellung mit Bezug auf die Bohrungsachse innerhalb des Bereichs zwischen dem Komplementärwert des Blockierungswinkels und π/4 gewählt ist.

2. Klappenventil nach Anspruch 1, bei dem wenigstens eine der Dichtoberflächen, entweder am Sitz oder der Verschlußscheibe, einer plastischen oder elastischen Deformation unterzogen werden kann, wenn die Verschlußscheibe an den Sitz angelegt wird, dadurch gekennzeichnet, daß der Kompressionswert ε durch die folgende Beziehung gegeben ist:

$$\varepsilon = (z-c) \sin \varphi - \frac{zx \cos \varphi}{1-xtg\varphi}$$

wobei x und z die Koordinaten der orthogonalen Projektion in die Ebene (OX, Z) eines laufenden Paars von symmetrischen Punkten ist, die zur Dichtoberfläche gehören.

3. Klappenventil nach Anspruch 1 oder 2, dadurch gekennzeichnet, daß die Dichtoberfläche durch gerade Linien erzeugt ist, die einen gegebenen Winkel β mit der Erzeugenden des ersten Kegels an irgendeinem Punkt der Ellipsenebene E in der Ebene bildet, die durch die Erzeugende und den Mittelpunkt der Ellipse definiert ist.

**Revendications**

1. Vanne à papillon comportant un corps (1) traversé par un passage (2), un obturateur ou papillon (3) étant monté rotatif dans ledit passage (2) autour d'un axe orthogonal à l'axe dudit passage, de manière à pouvoir être déplacé entre une position de fermeture dans laquelle une garniture fixée ou formée à la périphérie du disque de l'obturateur a un contact étanche avec un siège (8) porté par le corps et une position de pleine ouverture à peu près perpendiculaire à la position de fermeture, la surface périphérique de l'obturateur (3) et la surface conjugée du siège (8) étant des surfaces coniques définies par deux cônes de révolution tandis que l'axe de rotation de l'obturateur est suivant l'axe du passage, déporté à l'opposé du sommet du cône définissant la surface du siège par rapport au plan moyen du disque de l'obturateur, caractérisée en ce que la position d'un plan de joint où le papillon s'appuie sur le siège est déterminé, pour une valeur donnée de l'angle au sommet $2\varphi$ du cône de révolution définissant la surface de siège de la

vanne et pour une position déterminée de l'axe de rotation de l'obturateur dans un système orthogonal $\vec{OX}, \vec{Y}, \vec{Z}$, dans lequel l'axe $\vec{OX}$ est l'axe dudit cône, l'axe $\vec{OY}$ est parallèle à l'axe de rotation et l'axe $\vec{OZ}$ coupe l'axe de rotation en un point C de manière qu'un couple de points, dudit plan de joint, pour lesquels l'angle ($\delta$) de dégagement minimum est maximum, se projette dans la direction parallèle à l'axe de rotation dans ledit plan de joint dans un point Q situé dans le plan $(\vec{OX}, \vec{Z})$ dudit système orthogonal, les coordonnées dudit point Q et l'angle de dégangement correspondant ($\delta_Q$) sont respectivement données par les relations approchées suivantes:

$$X_Q = \sin \varphi \, \cos \varphi (1 - C^2)$$

$$Z_Q = c[1 - \sin^2 \varphi (1 - C^2)]$$

$$\sin \delta_Q = \frac{c}{\cos \varphi} \sqrt{\frac{1}{1 + C^2 tg^2 \varphi}}$$

C étant la distance dudit point C au point O, l'inclinaison $\theta$ du papillon, dans sa position de fermeture par rapport à l'axe de passage choisie entre le complément de l'angle de coincement et $\pi/4$.

2. Vanne à papillon suivant la revendication 1, dans laquelle l'une au moins des surfaces d'étanchéité de la vanne constituées par le siège (8) et le joint (15) du papillon présente une déformation plastique ou élastique lors de l'application du papillon sur le siège, caractérisée en ce que leur compression $\varepsilon$ est donné par la relation:

$$\varepsilon = (z-c) \sin \varphi - \frac{zx \cos \varphi}{1 - xtg\varphi}$$

dans laquelle x et z sont les coordonnées de la projection orthogonale au plan (OX, Z) d'une paire courante de points symétriques le long de la surface étanche.

3. Vanne à papillon suivant l'une des revendications 1 et 2, caractérisée en ce que la surface d'étanchéité entre le papillon (3) et son siège est engendrée par des droites formant un angle $\beta$ donné avec la génératrice du premier cône en tous points du plan de l'ellipse E, dans le plan défini par la génératrice et le centre de ladite ellipse.

FIG.1

EP 0 145 632 B1

FIG.2

FIG.3

FIG.5

FIG.4